# EUROPEAN PATENT SPECIFICATION

(11) **EP 0 630 493 B1**
(45) Date of publication and mention of the grant of the patent: **28.05.1997**
(21) Application number: 93907286.4
(22) Date of filing: 09.03.1993
(51) Int. Cl.: G05B 19/05

(54) **METHOD AND SYSTEM FOR AUTOMATIC GRAPHIC DISPLAY MODIFICATION BASED ON CONTROL PROGRAM MODIFICATION**
VERFAHREN UND VORRICHTUNG ZUR AUTOMATISCHEN MODIFIKATION EINES GRAPHISCHES DISPLAYS BASIEREND AUF EINER STEUERPROGRAMMODIFIKATION
PROCEDE ET SYSTEME DE MODIFICATION D'AFFICHAGE GRAPHIQUE AUTOMATIQUE SUR LA BASE D'UNE MODIFICATION DU PROGRAMME DE GESTION

(30) Priority: 09.03.1992 US 848222
(43) Date of publication of application: 28.12.1994
(73) Proprietor: ELECTRONIC DATA SYSTEMS CORPORATION, Plano, TX 75024 (US)
(72) Inventor: RHOADS, Michael, N., Livonia, MI 48152 (US)
(74) Representative: UEXKÜLL & STOLBERG
(86) International application number: US9302050
(87) International publication number: WO9318441

(56) References cited:
- EP-A- 0 148 951
- GB-A- 2 029 986
- US-A- 4 063 311
- US-A- 4 670 834

## Description

### Technical Field

This invention relates to methods and systems that monitor the operation of manufacturing devices and, particularly, to a method and system for automatically modifying the graphic display of a diagnostic work station upon detecting a change to the logic of the programmable control station being monitored.

### Background Art

A substantial percentage of industrial manufacturing and production is accomplished through the use of automated machinery. This automated machinery is typically controlled by a programmable control station using a program implementing control logic required to perform specific tasks. Although the operation of such automated machinery requires little or no operator intervention, it is still useful to monitor the operation of such machinery to diagnose malfunctions, ensure proper maintenance and control quality.

Typically, the operation of the programmable control station, and its coupled automated machinery, is monitored through the use of a diagnostic work station coupled to the programmable control station. In most instances, the diagnostic work station is programmed to display information concerning the status and operation of the coupled programmable control station and associated automated machinery. The display of the diagnostic work station informs operating personnel of fault conditions, device states, signal levels, switch settings and other information useful in diagnosing malfunctions and maintaining appropriate controls on the automated machinery. Often, information regarding the operation of the programmable control station and the automated machinery is presented to the operator of the diagnostic work station through a graphic display representing the logic of the programmable control station and/or the relationships between various elements of the monitored system.

Although the use of a diagnostic work station to monitor an attached programmable control station has many advantages, a significant problem can arise when the control logic of the programmable control station is altered. If the programmable control station is placed in operation using modified control logic and the diagnostic work station monitoring the programmable control station is placed in operation using a monitor program which does not account for the modified control logic of the programmable control station, the information displayed by the diagnostic work station could be misleading and erroneous. The prior art has addressed this situation in two ways.

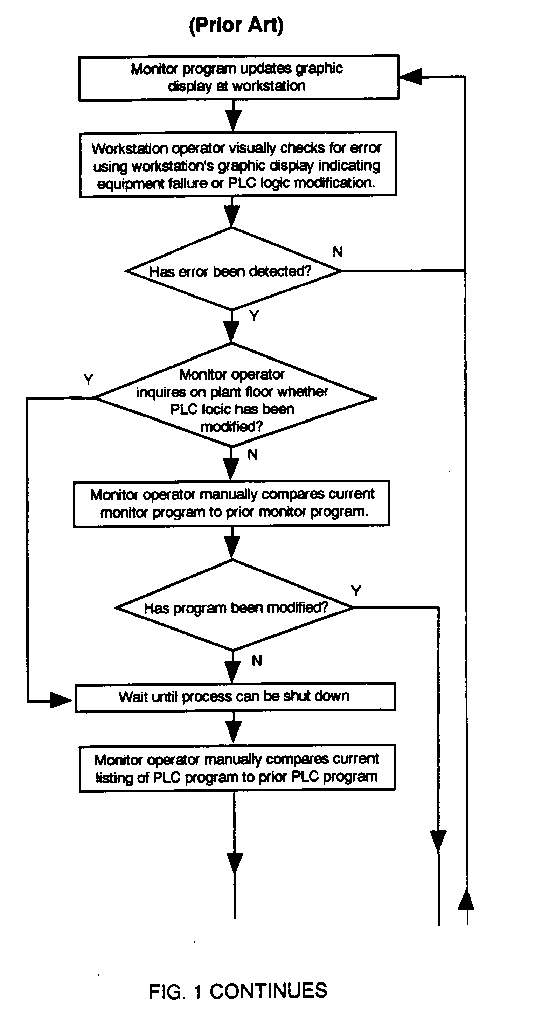

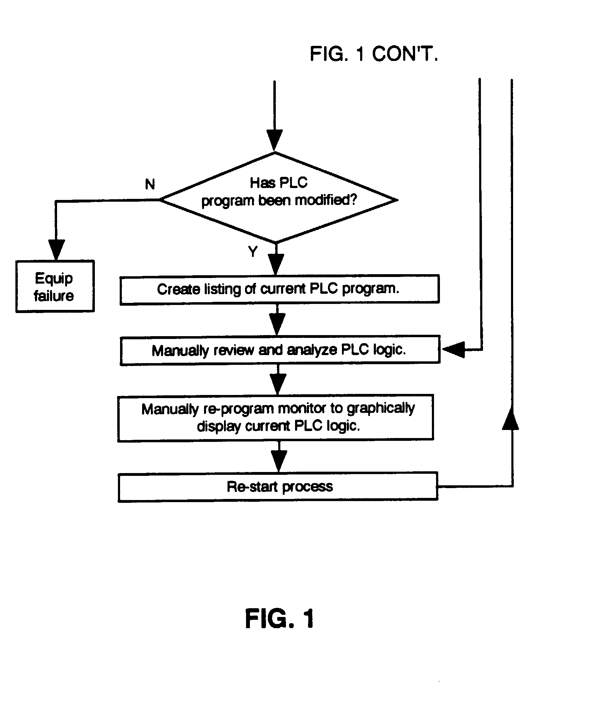

FIGURE 1 is a flow chart illustrating a first prior art approach to this situation describing a method of manually modifying the program controlling the diagnostic work station to reflect the modified control logic of the programmable control station.

The program controlling the diagnostic work station periodically updates the graphic display of the diagnostic work station to reflect the status of the attached programmable control station and automated machinery. Typically, an operator of the diagnostic work station visually checks the diagnostic work station's graphic display to detect the possibility of an error in the process performed by the programmable control station and the automated machinery. If no error is detected, no action is taken by the operator of the diagnostic work station and the process continues. If, however, the operator of the diagnostic work station detects an error, the operator must investigate whether the error is caused by an equipment failure or a modification of the control logic of the programmable control station.

To determine the source of the error, the operator of the diagnostic work station, through inquiries made on the plant floor, must determine whether the control logic of the programmable control station has been modified. If the control logic of the programmable control station has been modified, the process must be shut down. If the control logic of the programmable control station has not been modified, the logic of the current program of the diagnostic work station must be compared to the logic of the prior program of the diagnostic work station, as indicated by a program listing kept on file.

If the logic of the program controlling the diagnostic work station has been modified, it must be reviewed, analyzed and reprogrammed to accurately reflect the control logic of the programmable control station. If the logic of the program controlling the diagnostic work station has not been modified, either the responses to inquiries made on the plant floor were erroneous or there is an equipment failure. In either event, the process must be shut down.

After shutting down the process, a listing of the current program of the programmable control station must be compared to a listing of the prior program of the programmable control station as indicated by a program listing kept on file. If it is determined that the programmable control station logic has not been modified, the operator of the diagnostic work station can reasonably assume that an equipment failure has caused the error. If it is determined that the logic of the programmable control station has been modified, the current logic of the programmable control station must be reviewed and the program of the diagnostic work station must be altered to reflect those changes in the control logic of the programmable control station in order to accurately monitor the programmable control station. After the diagnostic work station has been reprogrammed, the process may be restarted.

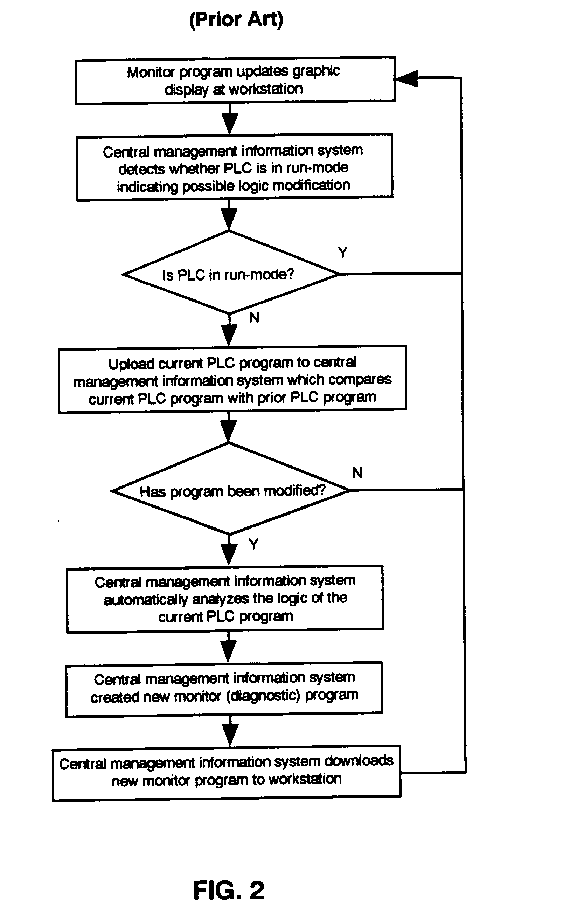

FIGURE 2 is a flowchart illustrating the second prior art approach to this situation, describing the method disclosed by U.S.P.N. 4,670,834 of Byal et al. Byal et al. discloses a system and method for automatic diagnostic program modification based on control program modification.

The program controlling the diagnostic work station periodically updates the graphic display of the diagnostic work station to reflect the status of the attached programmable control station and automated machinery. The diagnostic work station is attached to a central management information system which is used to detect whether the programmable control station is in run mode. If the programmable control station is in run mode, no action is taken and the process continues. If, however, the programmable control station is not in run mode, the central management information system uploads the current program controlling the programmable control station and compares this current program with a copy of the prior program controlling the programmable control station. The prior program controlling the programmable control station is retained on file by the central management information system.

If the central management information system determines that the current program controlling the programmable control station is the same as the prior program controlling the programmable control station, no action is taken and the process continues. If, however, the current program controlling the programmable control station is different than the prior program controlling the programmable control station, the central management information system automatically analyzes the logic of the current program controlling the programmable control station.

The central management information system then creates a new program to control the diagnostic work station based on the current program controlling the programmable control station. Finally, the central management information system downloads the new monitor program to the diagnostic work station, and the process is restarted.

Although both of the prior art approaches present a solution to the problem of updating the monitor program of the diagnostic work station to reflect a change in the control program of the programmable control station, each has significant disadvantages. The manual approach illustrated by FIGURE 1 is particularly time-consuming and expensive. This method requires a number of individuals having highly specialized skills to work together to achieve an adequate solution to the problem. The high level of human intervention renders this solution inefficient and undesirable.

The automated approach illustrated by FIGURE 2, also lacks efficiency and economy. This method requires additional equipment, namely a central management information system, to process and analyze the changes in the control program of the programmable control station. In addition, each time the control program of the programmable control station is modified, a new monitor program for the diagnostic work station must be created and downloaded to the diagnostic work station.

### Summary of the Invention

The present invention described and disclosed herein comprises a method and system of automatically modifying the graphic display of a diagnostic work station upon detecting a change in the control program of a coupled programmable control station.

An object of the present invention is to provide a method and system for automatically modifying the graphic display of a diagnostic work station upon detecting a change in the control program of a coupled programmable control station wherein the change in the control program of the programmable control station does not necessitate updating the monitor program of the diagnostic work station.

Another object of the present invention is to provide a method and system for automatically modifying the graphic display of a diagnostic work station upon detecting a change in the control program of a coupled programmable control station wherein the method and system will operate within the diagnostic work station, eliminating the need for additional equipment.

In carrying out the above objects and other objects of the present invention, a method is provided as claimed in claim 1. Said method is for automatically modifying the graphic display of a diagnostic work station upon detecting a change in the control program of a coupled programmable control station. The method includes the step of ascertaining whether the programmable control station is in run mode. The method also comprises the step of comparing the current control program with the prior control program upon detecting that the programmable control station is not in run mode. Upon detecting that the current control program is not identical to the prior control program, the method additionally includes the step of analyzing the current control logic to determine the contents of a new graphics display representing the current control logic. The method further includes the step of utilizing the monitor program to cause the diagnostic work station to display the new graphics display. Finally, the diagnostic work station, using the monitor program, displays a modified graphics display representative of the current control logic of the current control program.

Further in carrying out the above objects and other objects of the present invention, a system is also provided for carrying out the steps of the above described method.

One important feature of the present invention is the ability to couple more than one programmable control station to a single diagnostic work station. In a system with this configuration, the monitor program permits a user of the diagnostic work station to select which coupled programmable control station will be monitored and represented via the graphic display by the monitor program.

Another important feature of the present invention is the ability of the monitor program to update a graphic display representing the control logic of the programmable control station and the attached machinery at any time. A user may wish to update the graphic display upon starting a process regardless of whether a change to the control program has actually occurred. This simply configures the graphic display to correctly monitor the newly started process without requiring the creation of a monitor program from scratch.

A final important feature of the present invention is the ability of the monitor program to prompt a user of the diagnostic work station upon detecting that a possible control program change has occurred. This allows the user to decide whether he or she wishes to cause the monitor program to update the graphic display. If the user of the diagnostic workstation knows that the control program has not been substantively changed, the user has the option of not causing the monitor program to update the graphic display.

The objects, features and advantages of the present invention are readily apparent from the following detailed description of the best mode for carrying out the invention when taken in connection with the accompanying drawings.

### Brief Description of the Drawings

FIGURE 1 is a flow chart illustrating one prior art method of modifying the graphic display of the diagnostic work station to reflect the current control logic of the programmable control station;
FIGURE 2 is a flow chart illustrating a second prior art method of modifying the graphic display of the diagnostic work station to reflect the current control logic of the programmable control station;
FIGURE 3 is a flow chart illustrating the method of modifying the graphic display of the diagnostic work station to reflect the current control logic of the coupled programmable control station in accordance with the present invention;
FIGURE 4 is a block diagram illustrating the hardware required for the system of modifying the graphic display the diagnostic work station to reflect the current control logic of the coupled programmable control station in accordance with the present invention;
FIGURE 5 is a block diagram illustrating a specific configuration of automated machinery prior to a change in the control logic of the coupled programmable logic controller; and
FIGURE 6 is a block diagram illustrating a specific configuration of automated machinery after a change in the control logic of the coupled programmable logic controller.

### Detailed Description of the Drawing Figures

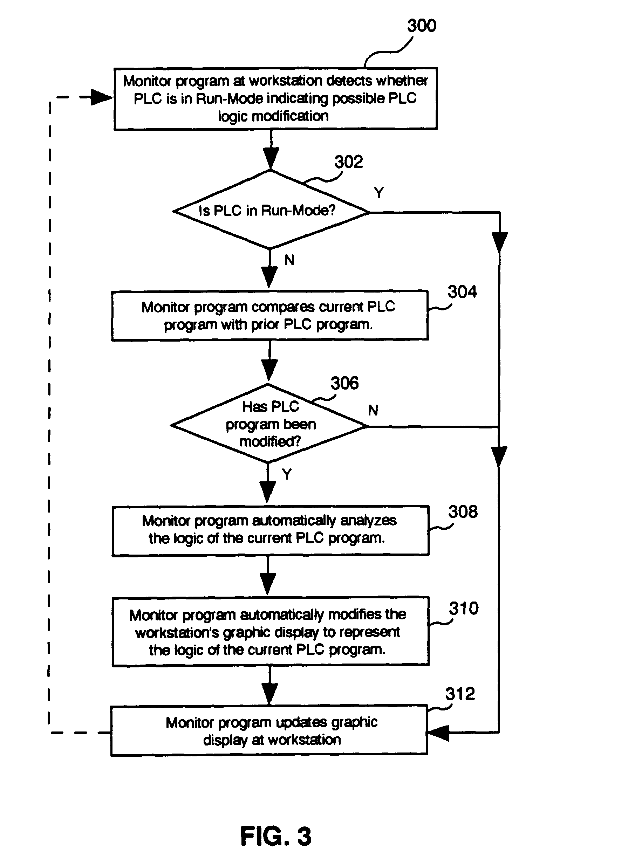

FIGURE 3 illustrates the method of the present invention. At block 300, the monitor program at the diagnostic work station detects whether the programmable control station is in run-mode. If the programmable control station is in run-mode, the monitor program passes control from block 302 to block 312 and continues normal operations by updating the graphic display of the work station to indicate the status of the automated machinery.

If the programmable control station has been taken out of run-mode, the monitor program must compare the current control program of the programmable control station with a file copy of the prior control program of the programmable control station as described by block 304. As shown by block 306, if the monitor program determines that no modification of the control program has occurred, the monitor program continues normal operations as described by block 312.

If the control program of the programmable control station has been modified, block 308 is performed and the monitor program automatically analyzes the logic of the current control program of the programmable control station. As described by block 310, the monitor program automatically modifies the graphic display of the diagnostic work station to represent the logic of the current control program of the programmable control station. Finally, the monitor program performs the step of block 312 and resumes normal operations by updating the graphic display of the work station to indicate the status of the automated machinery.

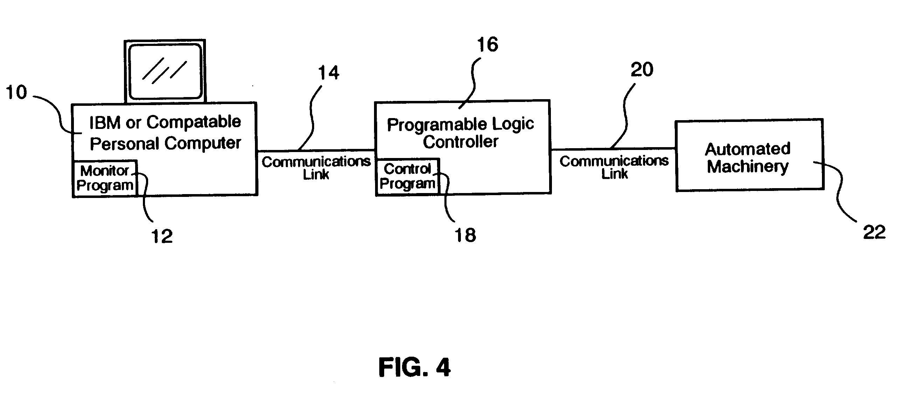

FIGURE 4 illustrates the hardware needed to monitor and perform typical automated manufacturing operations. In order to simplify the description of the present invention and to provide a concise description of the best mode for practicing this invention, it will be described in connection with a specific example. It should be understood at the outset, however, that this invention can be implemented with different computer equipment and implemented in different software languages.

In FIGURE 4, an IBM or compatible personal computer 10, operating as a diagnostic work station and having a monitor program 12 is connected via a communications link 14 to a programmable logic controller 16. The programmable logic controller 16, operating as a programmable control station and having a control program 18, is connected via a communications link 20 to automated machinery 22. The automated machinery 22 can take many forms and perform many functions.

For this example, assume that the automated machinery 22 takes the form of a tank-fill system which has been implemented in a plant and that the personal computer 10 is used to monitor the status of the pump in this system.

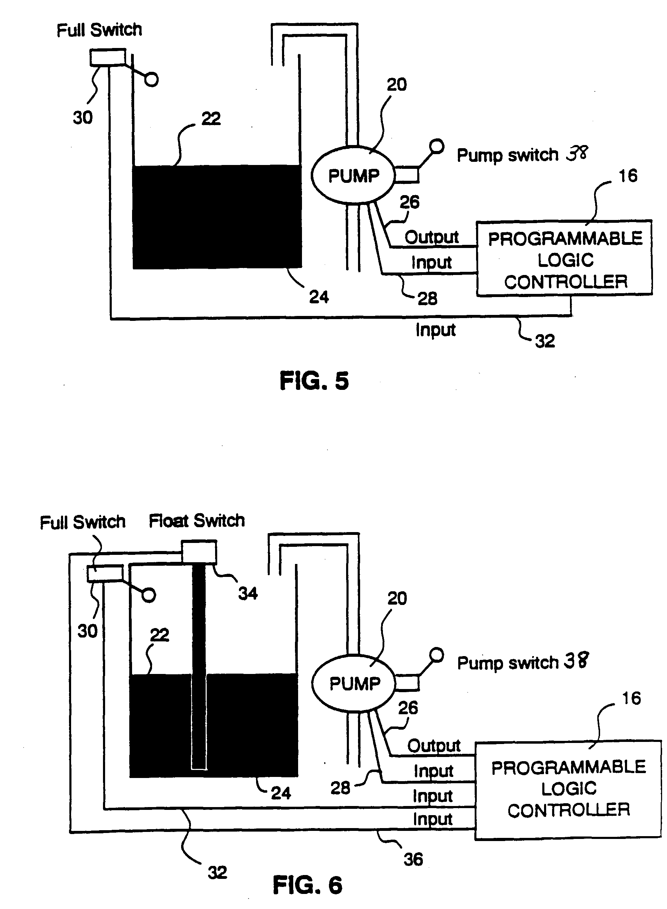

FIGURE 5 illustrates the individual components of the automated machinery for this specific example. The pump 20 is used to pump fluid 22 into a tank 24. The pump 20 is connected to the programmable logic controller 16 via an output line 26. The pump 20 is also connected to the programmable logic controller 16 via first input 28. In addition, the programmable logic controller 16 receives an input from a full switch 30 via an input 32. Output 26, input 28 and input 32 communicate the state of a device as either "on" or "off". In this example, an operator will turn "on" a pump switch 38 which, in turn, turns "on" the pump 20. When the fluid 22 triggers the full switch 30, the pump 20 will be turned "off".

In this example, the control program 18 has a very simple function. As long as the state of input 28 is "on", the control program 18 continuously tests the state of the full switch 30. Once the control program 18 determines that the state of the full switch 30 is "on", indicating the tank 24 is full of fluid 22, the control program 18 directs the programmable logic controller 16 to change the state of output 26 from "on" to "off" causing the pump 20 to stop filling the tank 24.

Throughout this process the monitor program 12 graphically displays on the personal computer 10 a representation of the various components of the automated machinery 22, their relationship to one another and their state (i.e. "on" or "off"). In this example, the monitor program 12 allows the operator of the personal computer 10 to verify the correct operation of the automated machinery 22. For instance, if the graphic display shows that the full switch 30 is "on" and the pump 20 has not gone "off", the operator of the personal computer must take action to determine and correct the source of the problem. In this case, it is possible that either the full switch 30 or the pump 20 has failed.

Continuing with the example, assume that changes are implemented in the automated machinery, as reflected in FIGURE 6. FIGURE 6 illustrates the same configuration of machinery as FIGURE 5 with the addition of a float switch 34 which is connected to the programmable logic controller 16 via input 36. The float switch 34 determines a low level of fluid 22 in the tank 24. The control program 18 is altered to set the state of output 26 to "on", when input 28 is "off", but input 36 is "on". This addition functions to turn the pump "on" when the fluid 22 reaches a sufficiently low level so as to turn float switch 34 on. In order to appropriately alter the control program 18, the process must be temporarily suspended by taking the programmable logic controller 16 out of run mode.

As soon as the programmable logic controller 16 has been taken out of run mode, the operator of the personal computer 10 is informed that there may be changes to the control program 18 of the programmable logic controller 16. As soon as the pump process is restarted, the operator of the personal computer 10 instructs the monitor program 12 to analyze the current logic of the control program 18. The monitor program 12 then causes the personal computer 10 to display an updated graphic representation of the process, including the recently added float switch 34. This graphic display is updated automatically, requiring no research of the process logic of the control program 18 and no research into the wiring of either the programmable logical controller 16 or the automated machinery 22.

## Claims

1. A method for automatically modifying a current graphic display of diagnostic information in a machine information system which includes at least one diagnostic work station (10) coupled to at least one programmable control station (16), the programmable control station (16) having current control logic expressed by a current control program (18) for operating associated plant machinery (22), the programmable control station (16) having a run mode, the diagnostic work station (10) having prior control logic for the programmable control station (16) expressed by a prior control program, the diagnostic work station (10) monitoring operation at the programmable control station (16), the current graphic display being produced by a monitor program (12) at the diagnostic work station (10), the current graphic display representing the current control logic expressed by the current control program (18), the method comprising the steps of:
(a) detecting at the diagnostic work station (10) whether the programmable control station (16) is in said run mode;
(b) proceeding to step (g) upon detecting that the programmable control station (16) is in said run mode;
**characterized in that**
(c) upon detecting that the programmable control station (16) is not in said run mode, said diagnostic work station (10) compares the current control program (18) with the prior control program stored therein;
(d) proceeding to step (g) upon detecting that the current control program (18) is identical to the prior control program;
(e) upon detecting that the current control program (18) is not identical to the prior control program, said diagnostic work station (10) analyzes the current control logic to determine a new graphics display representing the current control logic;
(f) said diagnostic work station (10) utilizes the monitor program (12) to display said new graphics display, and
(g) said diagnostic work station (10) utilizes the monitor program (12) to display the current control logic of the current control program (18).

2. The method as claimed in claim 1 wherein the detecting of step (a) could occur upon attaching the diagnostic work station (10) to the programmable control station (16).

3. The method as claimed in claim 1 or 2 wherein upon detecting that the current control program (18) is not identical to the prior control program in step (e), the method further includes the step of prompting a user of the diagnostic work station (10) for authorization to proceed with analyzing the current control logic to determine said new graphics display representing the current control logic.

4. The method as claimed in claim 1 wherein the method further includes a step to be performed before step (a) of prompting a user to select which programmable control station (16) to monitor in a system including a diagnostic work station (10) coupled to more than one programmable control station (16).

5. A system for automatically modifying a current graphic display of diagnostic information in a machine information system which includes at least one diagnostic work station (10) coupled to at least one programmable control station (16), the programmable control station (16) having current control logic expressed by a current control program (18) for operating associated plant machinery (22), the programmable control station (16) having a run mode, the diagnostic work station (10) having prior control logic for the programmable control station (16) expressed by a prior control program, the diagnostic work station (10) monitoring operation at the coupled programmable control station (16), the current graphic display being produced by a monitor program (12) at the diagnostic work station (10), the current graphic display representing the current control logic expressed by the current control program (18), the system comprising:
detecting means for detecting that the programmable control station (16) is in the run mode;
**characterized by**
means within said diagnostic work station (10) for comparing the current control program (18) with the prior control program if the programmable control station (16) is not in said run mode to determine whether the current control program (18) is identical to the prior control program;
means within said diagnostic work station for detecting if the current control program (18) is identical to the prior control program and if the current control program (18) is not identical to the prior control program to determine a new graphics display representing the current control logic;
means within said diagnostic work station (10) for displaying said new graphics display; and
means within said diagnostic work station (10) for displaying the current control logic of the current control program (18).

6. The system as claimed in claim 5 wherein the system further includes a means for prompting a user of the diagnostic work station (10) for authorization.

7. The system as claimed in claim 5 or claim 6 wherein the system includes more than one programmable control station (16) and further includes a means for prompting a user of the diagnostic work station (10) to select a programmable control station (16) to monitor.

## Patentansprüche

1. Verfahren zur automatischen Modifikation einer aktuellen graphischen Anzeige einer Diagnose-Information in einem Maschineninformationssystem, das zumindest eine Diagnose-Arbeitsstation (10) umfaßt, die mit zumindest einer programmierbaren Steuerstation (16) gekoppelt ist, wobei die programmierbare Steuerstation (16) eine aktuelle Steuerlogik hat, die durch ein aktuelles Steuerprogramm (18) ausgedrückt ist, um eine damit in Verbindung stehende Maschinenanlage (22) zu betreiben, wobei die programmierbare Steuerstation (16) einen Betriebsmodus hat, wobei die Diagnose-Arbeitsstation (10) für die programmierbare Steuerstation (16) eine vorhergehende Steuerlogik hat, die durch ein vorhergehendes Steuerprogramm ausgedrückt ist, wobei die Diagnose-Arbeitsstation (10) den Betrieb der programmierbaren Steuerstation (16) überwacht, wobei die aktuelle graphische Anzeige durch ein Überwachungsprogramm (12) in der Diagnose-Arbeitsstation (10) erzeugt wird, wobei die aktuelle graphische Anzeige die aktuelle Steuerlogik darstellt, die durch das aktuelle Steuerprogrammm (18) ausgedrückt ist, wobei das Verfahren die Schritte umfaßt:
(a) Erfassen in der Diagnose-Arbeitsstation (10), ob sich die programmierbare Steuerstation (16) in dem Betriebsmodus befindet;
(b) Fortfahren bei Schritt (g), wenn erfaßt wird, daß sich die programmierbare Steuerstation (16) in dem Betriebsmodus befindet;
**dadurch gekennzeichnet,** daß
(c) die Diagnose-Arbeitsstation (10) das darin gespeicherte vorhergehende Steuerprogramm mit dem aktuellen Steuerprogramm (18) vergleicht, wenn erfaßt wird, daß sich die programmierbare Steuerstation (16) nicht in dem Betriebsmodus befindet;
(d) bei Schritt (g) fortgefahren wird, wenn erfaßt wird, daß das aktuelle Steuerprogramm (18) mit dem vorhergehenden Steuerprogramm identisch ist;
(e) die Diagnose-Arbeitsstation (10) die aktuelle Steuerlogik analysiert, um eine neue graphische Anzeige zu bestimmen, die die aktuelle Steuerlogik darstellt, wenn erfaßt wird, daß das aktuelle Steuerprogramm (18) nicht identisch ist mit dem vorhergehenden Steuerprogramm;
(f) die Diagnose-Arbeitsstation (10) das Überwachungsprogramm (12) dazu verwendet, um die neue graphische Anzeige anzuzeigen; und
(g) die Diagnose-Arbeitsstation (10) das Überwachungsprogramm (12) dazu verwendet, um die aktuelle Steuerlogik des aktuellen Steuerprogramms (18) anzuzeigen.

2. Verfahren nach Anspruch 1, bei dem das Erfassen in Schritt (a) durch Kopplung der Diagnose-Arbeitsstation (10) mit der programmierbaren Steuerstation (16) erfolgen kann.

3. Verfahren nach Anspruch 1 oder 2, bei dem das Verfahren außerdem den Schritt umfaßt, einen Benutzer der Diagnose-Arbeitsstation (10) zur Berechtigung aufzufordern, mit der Analyse der aktuelle Steuerlogik fortzufahren, um die neue graphische Anzeige zu bestimmen, die die aktuelle Steuerlogik darstellt, wenn in Schritt (e) erfaßt wird, daß das aktuelle Steuerprogramm (18) nicht identisch ist mit dem vorhergehenden Steuerprogramm.

4. Verfahren nach Anspruch 1, bei dem das Verfahren außerdem einen Schritt umfaßt, der vor Schritt (a) durchgeführt wird, bei dem ein Benutzer dazu aufgefordert wird, auszuwählen, welche programmierbare Steuerstation (16) in einem System überwacht werden soll, das eine Diagnose-Arbeitsstation (10) enthält, die mit mehr als einer programmierbaren Steuerstation (16) gekoppelt ist.

5. Vorrichtung zur automatischen Modifikation einer aktuellen graphischen Anzeige einer Diagnose-Information in einem Maschineninformationssystem, das zumindest eine Diagnose-Arbeitsstation (10) umfaßt, die mit zumindest einer programmierbaren Steuerstation (16) gekoppelt ist, wobei die programmierbare Steuerstation (16) eine aktuelle Steuerlogik hat, die durch ein aktuelles Steuerprogramm (18) ausgedrückt ist, um eine damit in Verbindung stehende Maschinenanlage (22) zu betreiben, wobei die programmierbare Steuerstation (16) einen Betriebsmodus hat, wobei die Diagnose-Arbeitsstation (10) für die programmierbare Steuerstation (16) eine vorhergehende Steuerlogik hat, die durch ein vorhergehendes Steuerprogramm ausgedrückt ist, wobei die Diagnose-Arbeitsstation (10) den Betrieb der gekoppelten programmierbaren Steuerstation (16) überwacht, wobei die aktuelle graphische Anzeige durch ein Überwachungsprogramm (12) in der Diagnose-Arbeitsstation (10) erzeugt wird, wobei die aktuelle graphische Anzeige die aktuelle Steuerlogik darstellt, die durch das aktuelle Steuerprogramm (18) ausgedrückt ist, wobei das System aufweist:
eine Erfassungseinrichtung zum Erfassen, ob sich die programmierbare Steuerstation (16) in dem Betriebsmodus befindet;
**gekennzeichnet durch**
eine Einrichtung in der Diagnose-Arbeitsstation (10) zum Vergleichen des aktuellen Steuerprogramms (18) mit dem vorhergehenden Steuerprogramm, wenn sich die programmierbare Steuerstation (16) nicht in dem Betriebsmodus befindet, um zu bestimmen, ob das aktuelle Steuerprogramm (18) identisch ist mit dem vorhergehenden Steuerprogramm;
eine Einrichtung in der Diagnose-Arbeitsstation, um zu erfassen, ob das aktuelle Steuerprogramm (18) identisch ist mit dem vorhergehende Steuerprogramm, und um eine neue graphische Anzeige zu bestimmen, die die aktuelle Steuerlogik darstellt, wenn das aktuelle Steuerprogramm (18) nicht identisch ist mit dem vorhergehenden Steuerprogramm;
eine Einrichtung in der Diagnose-Arbeitsstation (10), um die neue graphische Anzeige anzuzeigen; und
eine Einrichtung in der Diagnose-Arbeitsstation (10), um die aktuelle Steuerlogik des aktuelle Steuerprogramms (18) anzuzeigen.

6. System nach Anspruch 5, bei dem das System außerdem eine Einrichtung aufweist, um einen Benutzer der DiagnoseArbeitsstaton (10) zu einer Berechtigung aufzufordern.

7. System nach Anspruch 5 oder Anspruch 6, bei dem das System mehr als eine programmierbare Steuerstation (16) und außerdem eine Einrichtung aufweist, um einen Benutzer der Diagnose-Arbeitsstation (10) aufzufordern, eine zu überwachende programmierbare Steuerstation (16) auszuwählen.

## Revendications

1. Procédé pour modifier automatiquement un affichage graphique en cours d'information de diagnostic dans un système d'information sur une machine qui comporte au moins un poste de travail (10) de diagnostic couplé à au moins un poste de commande programmable (16), le poste de commande programmable (16) comportant une logique de commande en cours, exprimée par un programme de gestion en cours (18) pour actionner une machine (22) d'une installation associée, le poste de commande programmable (16) ayant un mode de marche, le poste de travail (10) de diagnostic ayant une logique de commande antérieure pour le poste de commande programmable (16) exprimée par un programme de commande antérieure, le poste de travail (10) de diagnostic contrôlant le fonctionnement au niveau du poste de commande programmable (16), l'affichage graphique en cours étant produit par un programme de contrôle (12) au niveau du poste de travail (10) de diagnostic, l'affichage graphique en cours représentant la logique de commande en cours, exprimée par le programme de commande en cours (18), le procédé comprenant les étapes suivantes:
(a) détection, au niveau du poste de travail (10) de diagnostic, du fait que le poste de commande programmable (16) est dans ledit mode de marche;
(b) passage à l'étape (g) lors de la détection que le poste de commande programmable (16) est dans ledit mode de marche;
caractérisé en ce que
(c) lors de la détection du fait que le poste de commande programmable (16) n'est pas dans ledit mode de marche, ledit poste de travail (10) de diagnostic compare le programme de commande en cours (18) avec le programme de commande antérieure stocké dans celui-ci;
(d) passage à l'étape (g) lors de la détection du fait que le programme de commande en cours (18) est identique au programme de commande antérieure;
(e) lors de la détection du fait que le programme de commande en cours (18) n'est pas identique au programme de commande antérieure, ledit poste de travail (10) de diagnostic analyse la logique de commande en cours pour déterminer un nouvel affichage graphique représentant la logique de commande en cours;
(f) ledit poste de travail (10) de diagnostic utlise le programme de contrôle (12) pour afficher ledit nouvel affichage graphique, et
(g) ledit poste de travail (10) de diagnostic utilise le programme de contrôle (12) pour afficher la logique de commande en cours du programme de gestion en cours (18).

2. Procédé selon la revendication 1, dans lequel la détection de l'étape (a) pourrait se produire lors de la liaison du poste de travail (10) de diagnostic au poste de commande programmable (16).

3. Procédé selon la revendication 1 ou 2, dans lequel, lors de la détection du fait que le programme de commande en cours (18) n'est pas identique au programme de commande antérieure au cours de l'étape (e), le procédé comporte en outre une étape d'incitation d'un utilisateur du poste de travail (10) de diagnostic en vue d'une autorisation de passer à l'analyse de la logique de commande en cours afin de déterminer le nouvel affichage graphique représentant la logique de commande en cours.

4. Procédé selon la revendication 1, dans lequel le procédé comporte en outre une étape à exécuter avant l'étape (a) d'incitation d'un utilisateur à sélectionner le poste de commande programmable (16) à contrôler dans un système comportant un poste de travail (10) de diagnostic couplé à plus d'un poste de commande programmable (16).

5. Système pour modifier automatiquement un affichage graphique en cours d'information de diagnostic dans un système d'information sur une machine qui comporte au moins un poste de travail (10) de diagnostic couplé à au moins un poste de commande programmable (16), le poste de commande programmable (16) comportant une logique de commande en cours exprimée par un programme de commande en cours (18) pour actionner une machine associée (22) de l'installation, le poste de commande programmable (16) ayant un mode de marche, le poste de travail (10) de diagnostic ayant une logique de commande antérieure pour le poste de commande programmable (16) exprimée par un programme de commande antérieure, le poste de travail (10) de diagnostic contrôlant le fonctionnement au niveau du poste de commande programmable couplé (16), l'affichage graphique en cours étant produit par un programme de contrôle (12) au niveau du poste de travail (10) de diagnostic, l'affichage graphique en cours représentant la logique de commande en cours exprimée par le programme de gestion en cours (18), le système comprenant:
un moyen de détection pour détecter le fait que le poste de commande programmable (16) est dans le mode de marche;
caractérisé par
un moyen situé dans ledit poste de travail (10) de diagnostic pour comparer le programme de commande en cours (18) avec le programme de commande antérieure si le poste de commande programmable (16) n'est pas dans ledit mode de marche, afin de déterminer si le programme de commande en cours (18) est identique au programme de commande antérieure;
un moyen situé dans ledit poste de travail de diagnostic pour détecter si le programme de commande en cours (18) est identique au programme de commande antérieure et si le programme de commande en cours (18) n'est pas identique au programme de commande antérieure, pour déterminer un nouvel affichage graphique représentant la logique de commande en cours;
un moyen situé dans ledit poste de travail (10) de diagnostic pour afficher ledit nouvel affichage graphique; et
un moyen situé dans ledit poste de travail (10) de diagnostic pour afficher la logique de commande en cours du programme de commande en cours (18).

6. Système selon la revendication 5, dans lequel le système comporte en outre un moyen pour inciter un utilisateur du poste de travail (10) de diagnostic à une autorisation.

7. Système selon la revendication 5 ou la revendication 6, dans lequel le système comporte plus d'un poste de commande programmable (16) et comporte en outre un moyen pour guider un utilisateur du poste de travail (10) de diagnostic afin de sélectionner un poste de commande programmable (16) à contrôler.
